# EUROPÄISCHE PATENTSCHRIFT

(11) **EP 3 853 090 B1**
(45) Veröffentlichungstag und Bekanntmachung des Hinweises auf die Patenterteilung: **07.06.2023**
(21) Anmeldenummer: 19779388.8
(22) Anmeldetag: 17.09.2019
(51) Int. Cl.: B60T 17/22, B60T 13/74, F16D 55/225

(54) **VERFAHREN ZUM BESTIMMEN VON AUSLEGUNGSPARAMETERN EINER ELEKTROMECHANISCHEN BREMSE SOWIE ELEKTROMECHANISCHE BREMSE**
METHOD OF SETTING DESIGN PARAMETERS FOR AN ELECTROMECHANICAL BRAKE AND SUCH AN ELECTROMECHANICAL BRAKE
PROCÉDÉ DE PLANIFICATION DE LA CONCEPTION D'UN FREIN ÉLÉCTROMECHANIQUE ET UN TEL FREN ELECTROMECHANIQUE

(30) Priorität: 19.09.2018 AT 508002018
(43) Veröffentlichungstag der Anmeldung: 28.07.2021
(73) Patentinhaber: GreenBrakes GmbH, 8230 Hartberg (AT)
(72) Erfinder: PUTZ, Michael, 8272 Sebersdorf (AT)
(74) Vertreter: Gibler & Poth Patentanwälte KG
(86) Internationale Anmeldenummer: PCT/EP2019/074897
(87) Internationale Veröffentlichungsnummer: WO 2020/058284

(56) Entgegenhaltungen:
- WO-A1-01/90595
- AT-A1- 513 989
- DE-U1- 9 101 594

## Beschreibung

Die Erfindung betrifft ein Verfahren zum Bestimmen von Auslegungsparametern einer elektromechanischen Bremse, wobei die Bremse einen Elektromotor aufweist, welcher über ein Getriebe mit einem Bremsbelag verbunden ist, welcher an einen relativ zum Bremsbelag bewegbaren Reibbelag drückbar ist, wobei der Elektromotor mit dem Bremsbelag über ein Getriebe verbunden ist, welches eine über einen Betätigungshub nicht konstante Übersetzung aufweist.

Weiter betrifft die Erfindung eine elektromechanische Bremse, aufweisend einen Elektromotor sowie einen Bremsbelag und einen relativ zum Bremsbelag bewegbar angeordneten Reibbelag, wobei der Bremsbelag mittels des Elektromotors an den Reibbelag drückbar ist, um durch Reibung zwischen Bremsbelag und Reibbelag mechanische Energie in Wärmeenergie zu wandeln.

Aus dem Stand der Technik sind verschiedene Bremsen der eingangs genannten Art bekannt geworden, welche üblicherweise für Kraftfahrzeuge eingesetzt werden. Ziel bei derartigen Bremsen ist stets, eine sichere und zuverlässige Betätigung der Bremse über den Elektromotor zu gewährleisten und gleichzeitig eine kostengünstige Konstruktion zu erreichen. Hierzu wurde bereits der Einsatz eines Getriebes mit einer über einen Betätigungshub nicht konstanten Übersetzung im Dokument AT 513 989 A1 vorgeschlagen, wobei das Übersetzungsverhältnis zu Beginn eines Hubes hoch ist, sodass ein Luftspalt zwischen Bremsbelag und Reibbelag zügig überwunden werden kann, wonach das Übersetzungsverhältnis sinkt, um eine erforderliche große Anpresskraft zu erreichen. Als nachteilig bei derartigen Bremsen hat sich herausgestellt, dass bei einem realen Betrieb der entsprechenden Bremse der Elektromotor teilweise nicht in einem gewünschten Bereich einer maximalen Leistung betrieben wird, sondern häufig blockiert.

Aus der DE 9101594 U1 ist eine elektromechanische Bremse bekannt, bei welcher ein Zugseil der Bremse über einen Wickelkörper aufgewickelt wird, wobei ein Wickelradius des Wickelkörpers an eine Zugseil-Verstellkraft angepasst ist, um den Servomotor im Arbeitspunkt zu einer maximalen Abgeleistung betreiben zu können.

Aus der WO 0190595 A1 ist eine Bremse bekannt, bei welcher bei der Wahl des über den Betätigungshub nicht konstanten Übersetzungsverhältnisses variierende Brems-Zustellkräfte für das Bremsstell-Gestänge berücksichtigt werden.

Hier setzt die Erfindung an. Aufgabe der Erfindung ist es, ein Verfahren der eingangs genannten Art anzugeben, mit welchem Auslegungsparameter einer elektromechanischen Bremse, welche beispielsweise für ein Kraftfahrzeug oder dergleichen einsetzbar sein soll, derart bestimmbar sind, dass ein zuverlässigeres Betätigen bei gleichzeitig minimalem Bauraum gewährleistet ist.

Weiter soll eine elektromechanische Bremse der eingangs genannten Art angegeben werden, welche ein zuverlässigeres Betätigen bei gleichzeitig minimalem Bauraum gewährleistet.

Die erste Aufgabe wird durch ein Verfahren der eingangs genannten Art gelöst, bei welchem ein Elektromotor, ein Bremsbelag sowie ein Reibbelag gewählt werden, wonach die Übersetzung anhand des über den Betätigungshub wirkenden Gegenmomentes, welches aufgrund des gewählten Elektromotors, des gewählten Bremsbelages sowie des gewählten Reibbelages und einer mechanischen Verbindung dieser Elemente auf das Getriebe wirkt, derart gewählt wird, dass der Elektromotor im Wesentlichen über den gesamten Betätigungshub kontinuierlich in einem optimalen Betriebspunkt, insbesondere in einem Betriebspunkt maximaler Leistung, betrieben wird.

Im Rahmen der Erfindung wurde erkannt, dass bei Wahl des sich über den Betätigungshub ändernden Übersetzungsverhältnisses der Bremsbelag, der Reibbelag sowie die mechanische Verbindung zwischen Bremsbelag und Reibbelag berücksichtigt werden müssen, da diese Elemente Einfluss auf ein über den Betätigungshub auf den Elektromotor wirkendes und vom Betätigungshub abhängiges Gegenmoment haben. So wirkt, während der Bremsbelag einen Luftspalt passiert, welcher in einem geöffneten Zustand der Bremse den Bremsbelag vom Reibbelag trennt, ein geringes Gegenmoment und ab einem Kontakt des Bremsbelages mit dem Reibbelag ein höheres Gegenmoment, welches wiederum von einer Elastizität bzw. einer Steifigkeit von Bremsbelag und Reibbelag abhängig ist.

Als Übersetzungsverhältnis wird hierbei ein Verhältnis einer Bewegung des Bremsbelages relativ zum Reibbelag zu einer Bewegung des Elektromotors bzw. bei einem rotierenden Motor zu einer Drehzahl des Elektromotors verstanden. Das Übersetzungsverhältnis wird somit als Wegübersetzungsverhältnis bzw. Bewegungsübersetzungsverhältnis von einer Bewegung des Ausgangs des Getriebes zu einer Bewegung an einem Eingang des Getriebes, an welchem der Elektromotor mit dem Getriebe verbunden ist, definiert. Bei gleichbleibender Drehzahl bzw. gleichbleibender Geschwindigkeit des Elektromotors wird also bei einem hohen Übersetzungsverhältnis eine raschere Bewegung des Bremsbelages als bei einem niedrigen Übersetzungsverhältnis erreicht.

Üblicherweise wird ein Verlauf dieses Gegenmomentes über den Betätigungshub rechnerisch bestimmt, wonach das Übersetzungsverhältnis des Getriebes über den Betätigungshub an das Gegenmoment derart angepasst wird, dass der Elektromotor über den gesamten Betätigungshub in einem optimalen Betriebspunkt, insbesondere in einem Betriebspunkt maximaler Leistung, betrieben wird. Als optimaler Betriebspunkt wird hierbei jener Betriebspunkt verstanden, welcher einerseits ein zuverlässiges Betätigen der Bremse und andererseits eine minimale Betätigungszeit gewährleistet. Dieser Betriebspunkt kann abhängig von einer Motorkennlinie über den Betätigungshub variieren, um den Elektromotor beispielsweise möglichst rasch in einen Bereich maximaler Leistung zu bringen.

Günstig ist es, wenn ein Gegenmoment, welches bei einer Betätigung während eines Betätigungshubes auf den Elektromotor wirkt, rechnerisch insbesondere anhand von Toleranzen, einem Luftspalt zwischen dem Bremsbelag und dem Reibbelag in einem geöffneten Zustand der Bremse, Reibungsverlusten im Getriebe und/oder möglichen Wärmedehnungen ermittelt und bei der Bestimmung der variablen Übersetzung berücksichtigt wird. Insbesondere für einen Bereich des Betätigungshubes, in welchem der Luftspalt überwunden wird, kann sich rechnerisch ein sehr hohes vorteilhaftes Übersetzungsverhältnis ergeben, wenn eine Reibung im Getriebe nicht berücksichtigt wird. Insbesondere wenn das Getriebe eine Kurvenscheibe, eine Kugelrampe oder dergleichen aufweist, um die vom Betätigungshub abhängige Übersetzung konstruktiv zu realisieren, kann dann jedoch in der Praxis aufgrund einer vorhandenen Reibung Selbsthemmung auftreten. Es ist daher vorteilhaft, bei der Auslegung des Getriebes bzw. der Übersetzung eine auftretende Reibung bis zu einem maximal möglichen Reibwert zu berücksichtigen, um ein zuverlässiges Betätigen der Bremse zu gewährleisten.

Vorzugsweise wird die Bremse derart ausgelegt, dass eine zuverlässige Betätigung auch in einem ungünstigsten Fall, also wenn beispielweise Toleranzen mechanischer, magnetischer und elektrischer Elemente in der ungünstigsten Weise ausgenutzt werden, sodass ein Gegenmoment maximal ist, noch möglich ist. Hierzu können rechnerisch verschiedenste Kombinationen ausgenutzter Toleranzen simuliert und dadurch auf eine möglichst ungünstige Kombination geschlossen werden. Für das bei dieser ungünstigsten Kombination über den Betätigungshub auftretende Gegenmoment wird die Bremse bzw. die Übersetzung des Getriebes dann ausgelegt.

So wird die Bremse üblicherweise derart ausgelegt, dass eine sichere Betätigung, also ein das auf den Elektromotor wirkende Gegenmoment übersteigende Motormoment, auch dann gewährleistet ist, wenn sämtliche Parameter sämtlicher Elemente der Bremse mögliche Toleranzen in ungünstigster Weise ausnutzen, sodass ein Gegenmoment maximal ist. In der Regel werden dabei auch maximal ungünstige Wärmedehnungen berücksichtigt. Dadurch kann der bei entsprechenden Bremsen des Standes der Technik häufig auftretende Fall vermieden werden, dass der Elektromotor blockiert, weil beispielsweise bei einer hohen Übersetzung des Getriebes, welche für die rasche Überwindung des Luftspaltes theoretisch günstig wäre, der Luftspalt aufgrund von Dehnungen und/oder ausgenutzten Toleranzen bereits überwunden ist, und somit das durch das Getriebe auf den Elektromotor übersetzte Gegenmoment größer als ein im Elektromotor verfügbares Motormoment ist.

Üblicherweise wird das Gegenmoment mit numerischer Simulation bestimmt, um eine besonders genaue Auslegung der Bremse zu ermöglichen, sodass der Elektromotor im Wesentlichen über den gesamten Betriebshub, also zwischen einer geöffneten Position der Bremse und einer geschlossenen Position der Bremse, in einem optimalen Betriebspunkt, insbesondere in einem Betriebspunkt, an welchem eine Leistung des Elektromotors maximal ist, betrieben werden kann. Dabei kann ein Schließvorgang der Bremse auch gänzlich simuliert werden, um das sich durch gegebenenfalls dynamische Effekte definierte Gegenmoment zu ermitteln und die Übersetzung derart an den ungünstigsten möglichen Fall anzupassen, dass ein im Elektromotor verfügbares Moment stets über dem Gegenmoment liegt.

Es hat sich bewährt, dass bei der Bestimmung der vom Betätigungshub abhängigen, nicht konstanten Übersetzung eine Reduktion des Motormomentes berücksichtigt wird, welche hervorgerufen wird durch Entmagnetisierung an einem Ende einer geplanten Lebensdauer, erhöhte Temperatur, Fertigungstoleranzen und/oder Reduktion der Versorgungsspannung bis zu einer Untergrenze, an welcher eine Funktion der Bremse noch gewährleistet werden muss.

Die Bremse wird somit derart ausgelegt, dass das beim Elektromotor verfügbare Motormoment auch unter Berücksichtigung ungünstigster Umstände wie einer Entmagnetisierung, einer erhöhten Temperatur, Fertigungstoleranzen und/oder einer Reduktion der Versorgungsspannung immer größer ist als ein Gegenmoment, welches zum Bewegen des Bremsbelages bzw. zum Andrücken des Bremsbelages an den Reibbelag erforderlich ist, um eine zuverlässige Betätigung auch unter ungünstigen Betriebsbedingungen sowie nach Eintreten von mechanischen, elektrischen sowie magnetischen Alterungseffekten zu erreichen.

Durch Wahl entsprechender Parameter für die Übersetzung des Getriebes, welche vom Betätigungshub abhängig ist, kann erreicht werden, dass der Elektromotor bei einer Betätigung über den Betätigungshub in einem optimalen Betriebspunkt, insbesondere einem Betriebspunkt maximaler Leistung, betreibbar ist.

Günstig ist es, wenn der Elektromotor nahezu während des gesamten Betätigungshubes in einem Bereich maximaler Leistung betrieben wird, sodass ein zuverlässiges und gleichzeitig rasches Betätigen der Bremse auch mit einem Elektromotor erreicht werden kann, welcher eine geringere Nennleistung als Elektromotoren von entsprechenden Bremsen des Standes der Technik aufweisen, da diese Elektromotoren meist aufgrund ungünstiger Übersetzungen des Getriebes zumindest über einen Teilbereich des Betriebshubes nur zu einem geringen Grad ausgenutzt werden können. Ein zuverlässiges Betätigen der Bremse ist daher gemäß dem Stand der Technik nur durch eine deutliche Überdimensionierung des Elektromotors möglich. Eine mit einem erfindungsgemäßen Verfahren ausgelegte Bremse weist somit dieselbe Zuverlässigkeit und Betätigungszeit wie entsprechend überdimensionierte Bremsen des Standes der Technik auf, kann jedoch durch eine bessere Ausnutzung des Elektromotors wesentlich kleiner und kostengünstiger sowie mit einem leistungsschwächeren Elektromotor ausgebildet sein.

Bei einem Verfahren zur Herstellung einer elektromechanischen Bremse ist es zur Erreichung eines kleinen Bauraumes bei gleichzeitig zuverlässiger Betätigung vorteilhaft, wenn die elektromechanische Bremse gemäß Auslegungsparametern hergestellt wird, welche in einem erfindungsgemäßen Verfahren bestimmt wurden. Derartige Bremsen können insbesondere in Kraftfahrzeugen vorteilhaft eingesetzt werden.

Die weitere Aufgabe wird erfindungsgemäß durch eine elektromechanische Bremse der eingangs genannten Art gelöst, bei welcher der Elektromotor mit dem Bremsbelag über ein Getriebe mit einer über einen Betätigungshub nicht konstanten Übersetzung verbunden ist. Dadurch kann über den gesamten Betätigungshub eine optimale Ausnutzung des Elektromotors gewährleistet werden, sodass aufgrund eines kleineren Elektromotors eine kompaktere und günstigere Bauweise als bei Bremsen des Standes der Technik erreicht wird.

Üblicherweise ist die erfindungsgemäße Bremse in einem erfindungsgemäßen Verfahren hergestellt.

Eine erfindungsgemäße Bremse kann für ein Kraftfahrzeug wie einen PKW oder einen LKW eingesetzt werden. Alternativ kann eine erfindungsgemäße Bremse natürlich auch für weitere Anwendungsgebiete, in denen ein Element relativ zu einem anderen Element abgebremst wird, eingesetzt werden, insbesondere für Aufzüge, Roboter und dergleichen.

Vorteilhaft ist es, wenn die Übersetzung des Getriebes derart abhängig vom Betätigungshub gewählt ist, dass der Elektromotor bei einer Betätigung über den gesamten Betätigungshub in einem optimalen Betriebspunkt, insbesondere einem Betriebspunkt maximaler Leistung, betreibbar ist. In der Regel wird die Übersetzung derart ausgelegt, dass der Elektromotor aus der geöffneten Position der Bremse heraus bei Anliegen einer Spannung möglichst rasch in einen Betriebspunkt maximaler Leistung fährt, wonach der Elektromotor über den gesamten Betätigungshub in diesem Betriebspunkt bleibt. Günstig ist es, wenn das vom Betätigungshub abhängige Übersetzungsverhältnis über den Betätigungshub derart gewählt ist, dass eine zuverlässige Betätigung des Elektromotors auch dann gewährleistet ist, wenn Toleranzen, insbesondere Fertigungstoleranzen, von Elementen der Bremse auf ungünstigste Weise ausgenutzt werden und/oder ungünstigste Umgebungsbedingungen, wie beispielsweise eine extreme Temperatur, vorliegen, sodass ein Gegenmoment über den Betätigungshub maximal ist. Um einen besonders kostengünstigen Aufbau zu erreichen, ist üblicherweise vorgesehen, dass eine Versorgungsspannung des Elektromotors während des Betätigungshubes etwa konstant ist. Bevorzugt wird als Elektromotor ein bürstenloser Gleichstrommotor eingesetzt.

Um die über den Betätigungshub veränderliche Übersetzung auf einfache und robuste Weise umzusetzen, ist es günstig, wenn das Getriebe zumindest eine Kugelrampe, vorzugsweise mehrere regelmäßig um eine Rotationsachse angeordnete Kugelrampen aufweist, mit welchen die über den Betätigungshub nicht konstante Übersetzung konstruktiv umgesetzt ist. Entsprechende Kugelrampen können beispielsweise entlang einer Umfangsrichtung um eine Rotationsache des Elektromotors angeordnet sein und in Achsrichtung unterschiedliche Tiefen aufweisen, sodass in den Kugelrampen angeordnete Kugeln bei einer Rotation der Scheibe abhängig von einer Steigung der Kugelrampe an der jeweiligen Position eine unterschiedliche Übersetzung bewirken.

Besonders bevorzugt ist es in diesem Zusammenhang, wenn das Getriebe zwei um eine Rotationsachse drehbare Scheiben aufweist, welche über zumindest eine in einer Kugelrampe angeordnete Kugel verbunden sind, wobei die über den Betätigungshub nicht konstante Übersetzung des Getriebes zumindest teilweise mit der Kugelrampe gebildet ist. Die Scheiben können über eine Feder oder dergleichen vorbelastet sein, sodass diese aneinander gepresst werden und ein axialer Abstand zwischen den Scheiben abhängig von einer Position der Kugel in der Kugelrampe ist. Es kann dann eine Scheibe über den Elektromotor um die Rotationsachse drehbar antreibbar sein, sodass ein axialer Abstand zwischen den beiden Scheiben durch die Ausbildung der Kugelrampe definiert ist. Ist mit der zweiten Scheibe der Bremsbelag verbunden, wird somit die beiden Scheiben und die in der Kugelrampe gelagerte Kugel ein Getriebe gebildet, bei welchem eine über den Betätigungshub veränderliche Übersetzung durch unterschiedliche Steigungen der Kugelrampe auf einfache und gleichzeitig robuste Weise realisierbar ist.

Alternativ oder ergänzend kann vorgesehen sein, dass das Getriebe zumindest einen um eine Rotationsachse drehbar angeordneten, unrunden Nocken aufweist, über welchen der Elektromotor mit dem Bremsbelag verbunden ist, wobei die über den Betätigungshub nicht konstante Übersetzung des Getriebes zumindest teilweise mit dem unrunden Nocken gebildet ist.

Es hat sich bewährt, dass das Getriebe eine auf einer Welle angebrachte Steuerungsscheibe, deren Mittelpunkt außerhalb der Wellenachse liegt, oder einen Hebel aufweist, um die über den Betätigungshub nicht konstante Übersetzung konstruktiv umzusetzen. Dies kann insbesondere für einen Einsatz einer erfindungsgemäßen Bremse in Lastkraftwagen vorteilhaft sein.

Die Steuerungsscheibe oder der Hebel kann vom Elektromotor direkt oder indirekt, insbesondere über eine Kurvenscheibe, ein Gestänge oder dergleichen angetrieben sein.

Es versteht sich, dass auch eine im Getriebe gegebenenfalls enthaltene Kugelrampe oder ein im Getriebe gegebenenfalls enthaltener Nocken vom Elektromotor direkt oder indirekt angetrieben sein können. Darüber hinaus können auch unterschiedliche Getriebetypen kombiniert werden, um die gewünschte Übersetzung, welche vom Betätigungshub abhängig ist, zu realisieren.

Weiter kann alternativ oder ergänzend zur konstruktiven Umsetzung des Getriebes vorgesehen sein, dass das Getriebe ein Kurvengetriebe, eine Kurvenscheibe, ein Gestänge und/oder ein Koppelgetriebe aufweist, um die über den Betätigungshub nicht konstante Übersetzung konstruktiv umzusetzen.

Vorteilhaft ist es, wenn ein Verschleißnachsteller vorgesehen ist, mit welchem eine Position des Bremsbelages relativ zum Reibbelag an einen Verschleiß des Bremsbelages und des Reibbelages automatisiert anpassbar ist.

Um eine möglichst kostengünstige elektromechanischer Bremse zu erreichen, ist es vorteilhaft, wenn ein mechanischer Verschleißnachsteller eingesetzt wird. Beispielsweise kann hierzu eine Schraube mit besonders großer Steigung in einer Mutter angeordnet sein, wobei die Schraube in der Mutter genauso viel Spiel hat, wie als Luftspalt der Bremse erwünscht ist. Solange die Bremse im Luftspalt betätigt wird, erfolgt daher bei einer Bewegung der Schraube in der Mutter keine Bewegung der Mutter. Wenn allerdings aufgrund von Verschleiß ein größerer Luftspalt vorliegt, wird die Schraube aufgrund der großen Steigung von der Mutter gedreht, weil diese durch aufgebrauchtes Spiel in der Mutter zum Anliegen kommt. Dabei wird genauso viel an der Schraube nachgedreht, wie zu viel an Luftspalt vorliegt. Bei Auftreten einer höheren Anpresskraft darf sich die Schraube jedoch nicht weiterhin mitdrehen, weswegen eine einfache Blockiereinrichtung für die Schraubendrehung vorgesehen sein kann, indem bei kleinen Belagsanpresskräften eine Feder zusammengedrückt wird, um einen Reibschluss zwischen Schraube und stehenden Teil zu bewirken, welcher eine weitere Schraubendrehung verhindert. Derartige mechanische Verschleißnachsteller sind bei PKW-Handbremsen bekannt, wurden jedoch bislang nicht bei elektromechanischen Bremsen eingesetzt.

Ein Übersetzungsverhältnis der Bremse ist üblicherweise derart gewählt, dass dabei auch auf eine Änderung einer Elastizität der Bremse Rücksicht genommen wird, welche Reduktion bzw. Veränderung einer Elastizität beispielsweise durch ein Abnützen von Reibbelag auftreten kann.

Es hat sich bewährt, dass das Getriebe derart ausgebildet ist, dass das Übersetzungsverhältnis über den Betätigungshub sowohl positive als auch negative Werte aufweist. Durch eine entsprechende Ausbildung kann eine Bremse gebildet werden, welche beispielsweise in einem stromlosen Zustand geschlossen bleibt. So bewirkt ab dem Punkt, ab welchem das Übersetzungsverhältnis das Vorzeichen wechselt, ein durch eine Elastizität von Bremsbelag und Reibbelag in geschlossenem Zustand der Bremse wirkendes Gegenmoment motorseitig am Getriebe kein Moment, welches den Elektromotor auch in stromlosen Zustand zu einem Öffnen der Bremse veranlassen könnte. Die Bremse kann somit in einem stromlosen Zustand einen stabilen geschlossenen Zustand haben. Konstruktiv kann ein entsprechender Vorzeichenwechsel des Übersetzungsverhältnisses beispielsweise durch eine Kugelrampe umgesetzt werden, welche bis zu einem vordefinierten Punkt eines Betätigungshubes eine abnehmende Tiefe aufweist, wonach die Tiefe der Kugelrampe wieder zunimmt, sodass eine Steigung der Kugelrampe ebenfalls das Vorzeichen wechselt.

Weiter kann vorgesehen sein, dass das Getriebe derart ausgebildet ist, dass das Übersetzungsverhältnis zumindest über einen Teilbereich des Betätigungshubes Null ist, sodass in diesem Teilbereich eine Bewegung des Elektromotors keine Bewegung des Bremsbelages relativ zum Reibbelag bewirkt. Auch dadurch kann erreicht werden, dass sich die Bremse in einem stromlosen Zustand nicht selbsttätig öffnet. Dadurch kann eine entsprechende Bremse auf einfache Weise als Parkbremse in einem Kraftfahrzeug eingesetzt werden, sodass ein Lösen der Bremse bei leerer Batterie ausgeschlossen ist. Konstruktiv kann ein entsprechendes Übersetzungsverhältnis beispielsweise durch eine Kugelrampe umgesetzt werden, welche zumindest über einen Teilbereich keine Steigung aufweist.

Um die Bremse parallel zum Elektromotor auch auf anderem Wege betätigen zu können, beispielsweise bei Ausfall des Elektromotors, ist es günstig, wenn ein Seilzuganschluss vorgesehen ist, sodass der Bremsbelag durch einen Zug an einem am Seilzuganschluss angebrachten Seil gegen den Reibbelag drückbar ist. Eine entsprechende Bremse kann dann beispielsweise in einem Kraftfahrzeug über den Elektromotor und einen Handbremshebel betätigbar sein, sodass die Bremse als Betriebsbremse mit dem Elektromotor betätigt wird, um ein Brake-by-Wire-System zu bilden, während die Bremse gleichzeitig handbetätigt als Haltebremse eingesetzt werden kann.

Die Bremse kann auch derart ausgebildet sein, dass diese bei Betätigung über den Seilzuganschluss in einen selbsthaltenden Zustand bringbar ist, während die Bremse bei Betätigung über den Elektromotor in einen Zustand bringbar ist, in welchem die Bremse bei Ausfall einer Spannungsversorgung gelöst wird.

Eine konstruktiv besonders einfache Lösung ergibt sich dabei, wenn der Seilzuganschluss durch ein Gehäuse des Getriebes ragt und mit dem Gehäuse bewegbar über eine Dichtung verbunden ist, sodass eine Verbindung des Seiles mit dem Seilzuganschluss außerhalb des Gehäuses erfolgen kann und eine Bewegung des Seiles durch den Seilzuganschluss in das Getriebe übertragen wird. Im Getriebe befindet sich üblicherweise Öl, weswegen ein Inneres des Getriebes üblicherweise gegenüber einer Umgebung abgedichtet ist. Durch die entsprechende Ausbildung des Seilzuganschlusses, welcher vorzugsweise drehbar mit dem Gehäuse des Getriebes verbunden ist, ist es nicht erforderlich, das Seil selbst in das abgedichtete Getriebe zu führen, sodass eine besonders einfache Konstruktion erreicht wird.

Bevorzugt ist vorgesehen, dass zumindest ein weiterer Motor vorgesehen ist, mit welchem die Bremse unabhängig vom Elektromotor betätigbar ist. Der weitere Motor kann ebenfalls als Elektromotor ausgebildet sein. Dadurch kann gewährleistet werden, dass die Bremse auch bei Ausfall eines Elektromotors funktionstüchtig ist. Ferner kann dann ein erster Elektromotor für die Betätigung der Bremse als Betriebsbremse und ein zweiter Elektromotor für die Betätigung der Bremse als Haltebremse eingesetzt werden, sodass beide Funktionen unabhängig voneinander realisierbar sind.

Vorteilhaft ist es, wenn eine Feder vorgesehen ist, welche bei einem Lösen der Bremse unterstützend wirkt, sodass ein vom Elektromotor aufzubringendes Drehmoment reduziert ist, wobei die Feder insbesondere derart wirkt, dass die Bremse in einem stromlosen Zustand des Elektromotors zumindest teilweise geöffnet ist. Dadurch können ein zuverlässigeres Lösen der Bremse und/oder eine reduzierte Beanspruchung des Elektromotors erreicht werden, um beispielsweise eine in einem stromlosen Zustand selbstlösende Bremse zu erreichen.

Alternativ oder ergänzend kann vorgesehen sein, dass eine Feder vorgesehen ist, welche bei einem Betätigen der Bremse unterstützend wirkt, sodass ein vom Elektromotor aufzubringendes Drehmoment reduziert ist, wobei die Feder insbesondere derart wirkt, dass die Bremse in einem stromlosen Zustand des Elektromotors zumindest teilweise geschlossen ist. Dadurch können ein zuverlässigeres Betätigen der Bremse und/oder eine reduzierte Beanspruchung des Elektromotors erreicht werden, um beispielsweise eine in stromlosem Zustand blockierende Bremse zu erreichen.

Bei einem Fahrzeug mit einer elektromechanischen Bremse ist es vorteilhaft, wenn die elektromechanische Bremse erfindungsgemäß ausgebildet ist.

Dabei kann vorgesehen sein, dass die elektromechanische Bremse als Betriebsbremse ausgebildet ist, um das fahrende Fahrzeug bis zum Stillstand abzubremsen.

Weiter kann vorgesehen sein, dass die elektromechanische Bremse als Parkbremse ausgebildet ist, um ein Wegrollen eines geparkten Fahrzeuges zu verhindern. Ergänzend zu einer möglichen Betätigung über den Elektromotor kann vorgesehen sein, dass die Bremse auch über einen Handbremshebel betätigbar ist.

Bevorzugt ist dabei vorgesehen, dass der Handbremshebel über ein Seil und einen mit der Bremse verbundenen Seilzuganschluss derart mit der Bremse verbunden ist, dass durch eine Betätigung des Handbremshebels der Bremsbelag gegen den Reibbelag drückbar ist.

Es hat sich bewährt, dass der Seilzuganschluss einen Hebel aufweist, welcher abtriebsseitig derart mit dem Getriebe verbunden ist, dass ein Abtrieb des Getriebes durch eine Zugkraft im Seil in derselben Weise bewegbar ist, in welcher der Abtrieb auch durch eine Betätigung des Elektromotors betätigbar ist, insbesondere um eine Rotationsachse rotierend, um den Bremsbelag an den Reibbelag zu drücken. Die Bremse ist damit durch den Seilzug parallel zum Elektromotor betätigbar, um die Bremse beispielsweise bei Ausfall einer Spannungsversorgung betätigen zu können.

Insbesondere wenn die Bremse als Parkbremse eingesetzt ist, ist es günstig, wenn die Bremse derart ausgebildet ist, dass bei Ausfall einer Stromversorgung eine Stellung der Bremse beibehalten wird.

Ferner kann vorgesehen sein, dass die Bremse derart ausgebildet ist, dass die Bremse bei Ausfall einer Stromversorgung betätigt wird, insbesondere über eine Feder.

Wenn die Bremse als Betriebsbremse vorgesehen ist, sind in der Regel zwei Bremskreise vorgesehen, wobei üblicherweise erwünscht ist, dass das Fahrzeug auch bei Ausfall eines Bremskreises manövrierfähig bleibt. Es ist dann erwünscht, dass die Bremse bei Ausfall einer Stromversorgung gelöst wird. Hierzu hat es sich als vorteilhaft erwiesen, dass die Bremse derart ausgebildet ist, dass die Bremse bei Ausfall einer Stromversorgung gelöst wird, insbesondere über eine Feder.

Eine erfindungsgemäß ausgebildete Bremse kann grundsätzlich auf jede beliebige Weise ausgebildet sein, insbesondere als Trommelbremse oder Scheibenbremse. Weiter kann eine erfindungsgemäße Bremse auch als Schwimmsattelbremse ausgebildet sein.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:
Fig. 1 eine erfindungsgemäße elektromechanische Bremse in schematischer Darstellung;
Fig. 2 schematische Darstellung eines Verfahrens zur Herstellung einer erfindungsgemäßen Bremse;
Fig. 3 unterschiedliche Elastizitätsverläufe einer Bremse;
Fig. 4 ein Detail einer Ausführungsform einer erfindungsgemäßen Bremse;
Fig. 5 ein Detail einer weiteren Ausführungsform einer erfindungsgemäßen Bremse in schematischer Darstellung;
Fig. 6 ein weiteres Detail einer erfindungsgemäßen Bremse;
Fig. 7 ein Detail einer weiteren Ausführungsform einer erfindungsgemäßen Bremse in schematischer Darstellung;
Fig. 8 ein weiteres Ausführungsbeispiel einer erfindungsgemäßen Bremse in schematischer Darstellung.

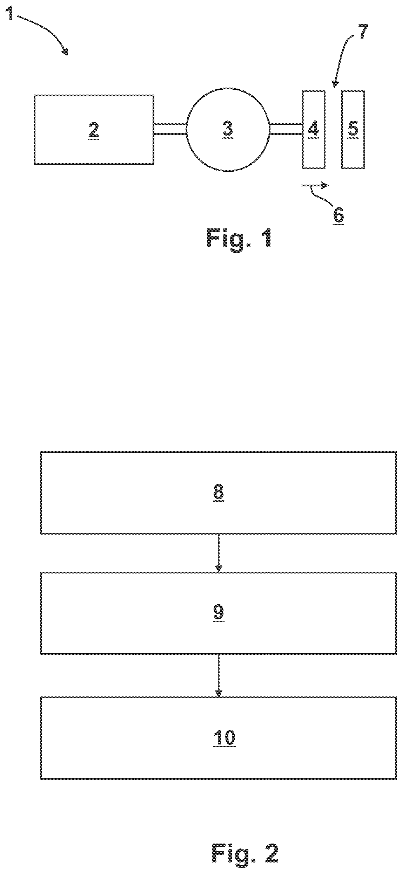

Fig. 1 zeigt eine erfindungsgemäße Bremse 1 in schematischer Darstellung. Wie ersichtlich ist zwischen einem Elektromotor 2 und einem Bremsbelag 4, welcher in einer Schließrichtung 6 gegen einen Reibbelag 5 drückbar ist, ein Getriebe 3 vorgesehen. Der Reibbelag 5 kann beispielsweise durch eine Bremsscheibe eines Kraftfahrzeuges, insbesondere eines PKWs, gebildet sein, welche mit einem Rad des Kraftfahrzeuges mitrotierend angeordnet ist.

Der Bremsbelag 4 kann durch Bremsbacken gebildet sein, welche nicht mit einem Rad des Kraftfahrzeuges mitrotierend mit dem Kraftfahrzeug verbunden sind. Um eine geringe Baugröße, niedriges Gewicht und geringe Kosten zu erreichen, ist erfindungsgemäß vorgesehen, dass das Getriebe 3 über einen Betätigungshub, welchen der Bremsbelag 4 zwischen einer offenen Position der Bremse 1 und einer geschlossenen Position der Bremse 1 ausführen kann, eine veränderliche Übersetzung aufweist. Üblicherweise ist die Übersetzung zu Beginn eines Hubes größer als an einem Ende des Betätigungshubes, da zu Beginn des Betätigungshubes ein Luftspalt 7 zwischen Bremsbelag 4 und Reibbelag 5 überwunden werden muss, während an einem Ende des Betätigungshubes der Bremsbelag 4 am Reibbelag 5 aufliegt, sodass auf den Elektromotor 2 ein hohes Gegenmoment wirkt.

Fig. 2 zeigt ein erfindungsgemäßes Verfahren zum Herstellen einer Bremse 1. Dabei werden in einem ersten Schritt 8 ein Elektromotor 2, ein Bremsbelag 4, ein Reibbelag 5 sowie eine mechanische Verbindung dieser Elemente gewählt, wonach in einem zweiten Schritt 9 ein sich durch den Bremsbelag 4, den Reibbelag 5, die mechanische Verbindung, den Elektromotor 2 sowie gegebenenfalls weitere Bestandteile gegen das Gegenmoment ermittelt wird. Anschließend wird in einem dritten Schritt 10 eine Übersetzung des Getriebes 3 abhängig vom Betätigungshub derart gewählt, dass der Elektromotor 2 über einen Betätigungshub stets in einem optimalen Betriebspunkt betrieben wird, wenn der Elektromotor 2 zum Betätigen der Bremse 1 betätigt wird.

Dies ist weitestgehend ein Betriebspunkt, in welchem der Elektromotor 2 eine maximale Leistung aufweist, sodass der Bremsbelag 4 sehr zügig in Schließrichtung 6 über den Luftspalt 7 bewegt wird, wobei eine Übersetzung üblicherweise hoch ist, wonach der Bremsbelag 4 am Reibbelag 5 anliegt, wonach der Bremsbelag 4 weiter gegen den Reibbelag 5 gedrückt wird, wobei üblicherweise eine Übersetzung gering ist.

Hierbei werden üblicherweise Toleranzen berücksichtigt, innerhalb welcher die einzelnen Bestandteile der Bremse 1 vorliegen können, sodass eine Betätigung zuverlässig auch dann möglich ist, wenn sich Toleranzen der einzelnen Bestandteile der Bremse 1 in ungünstigster Weise addieren. Insbesondere werden dabei Fertigungstoleranzen, Reibungsverluste im Getriebe 3 und mögliche Wärmedehnungen rechnerisch ermittelt und berücksichtigt. Ferner wird die Übersetzung derart gewählt, dass ein zuverlässiges Betätigen in einem optimalen Betriebspunkt dann möglich ist, wenn der Elektromotor 2 durch eine Entmagnetisierung an einem Ende einer geplanten Lebensdauer der Bremse 1 aufgrund erhöhter Temperatur im Betrieb, aufgrund von Fertigungstoleranzen und/oder aufgrund einer Reduktion einer Versorgungsspannung nur mehr zur Aufbringung eines reduzierten Motormomentes geeignet ist.

Darüber hinaus wird bei Auslegung der Übersetzung, welche über den Betätigungshub nicht konstant ist, berücksichtigt, dass sich eine Elastizität von Reibbelag 5 und Bremsbelag 4 mit einer Abnutzung von Reibbelag 5 und Bremsbelag 4 ändern kann, sodass eine zuverlässige Betätigung auch noch bei einer entsprechend erhöhten Steifigkeit gewährleistet ist.

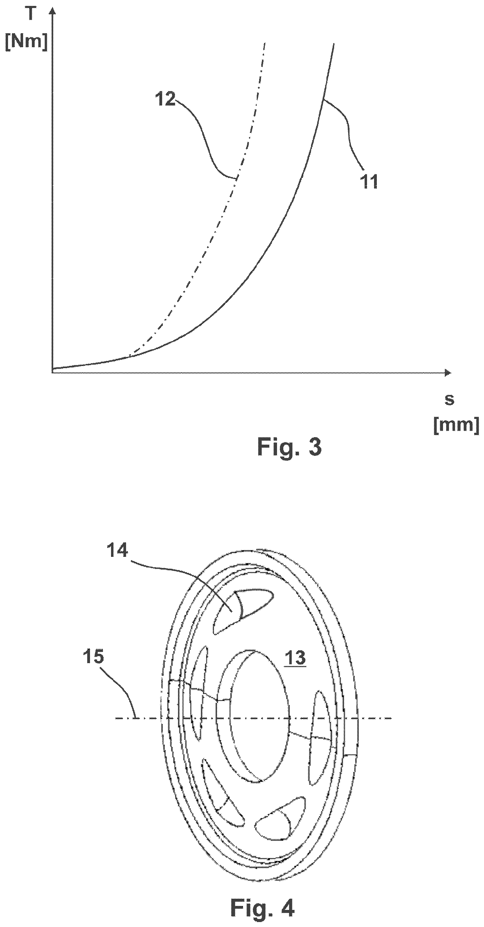

Fig. 3 zeigt ein Gegenmoment über den Betätigungshub einer Bremse 1 mit neuem Reibbelag 5 in durchgezogener Linie 11 und zum Vergleich in strichpunktierter Linie 12 ein Gegenmoment einer Bremse 1 mit abgenutztem Reibbelag 5 und Bremsbelag 4 zeigt. Wie ersichtlich weist die Bremse 1, bei welcher Reibbelag 5 und Bremsbelag 4 abgenutzt sind nach einen bestimmten Hub, in welchem der Bremsbelag 4 den Luftspalt 7 passiert, ein stärkter zunehmendes Gegenmoment auf, welches bei Auslegung der Übersetzung des Getriebes 3 derart berücksichtigt wird, dass das Motormoment stets größer als das über das Getriebe 3 auf den Elektromotor 2 wirkende Gegenmoment ist. Dadurch kann die Bremse 1 auch bei Alterung zuverlässig betätigt und der Elektromotor 2 in einem optimalen Betriebspunkt betrieben werden.

Fig. 4 zeigt einen Teil eines Getriebes 3 einer erfindungsgemäßen Bremse 1, welches zur konstruktiven Umsetzung der über den Betätigungshub nicht konstanten Übersetzung eine Kugelrampe 14 aufweist. Dabei sind im Getriebe 3 zwei Scheiben 13 vorgesehen, von welchen wenigstens eine mit derartigen Kugelrampen 14 ausgebildet ist. Durch eine Rotation einer Scheibe 13 wird ein Rollen der Kugeln in den Kugelrampen 14 bewirkt, sodass ein minimaler Axialabstand der beiden Scheiben 13 durch die Kugelrampen 14 definiert ist. Dadurch kann der mit einer abtriebsseitigen Scheibe 13 verbundene Bremsbelag 4 über eine Rotation des mit einer antriebsseitigen Scheibe 13 verbundenen Elektromotors 2 in Achsrichtung bewegt werden. Eine Übersetzung des somit durch die Kugelrampen 14 gebildeten Getriebes 3 ist dabei von einer Steigung der Kugelrampe 14 an einer jeweiligen Winkelposition abhängig und kann über den Betätigungshub auf einfache Weise beliebig gestaltet werden. Die Scheibe 13 kann über den Elektromotor 2 direkt oder über ein mit dem Elektromotor 2 verbundenes weiteres Getriebe, welches wiederum eine lineare oder eine nicht lineare Übersetzung aufweisen kann, angetrieben sein. Weiter kann natürlich auch eine Feder vorgesehen sein, um ein Betätigen der Bremse 1 und/oder ein Lösen der Bremse 1 zu unterstützen.

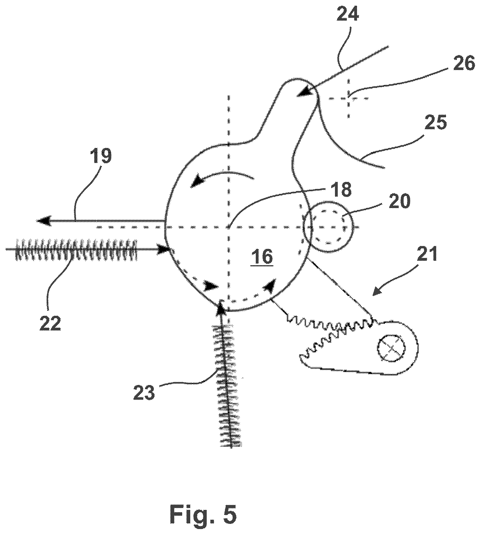

Fig. 5 zeigt ein Detail eines weiteren Ausführungsbeispieles eines Getriebes 3 einer erfindungsgemäßen Bremse 1, bei welcher eine Anpressung des Bremsbelages 4 an den Reibbelag 5 über eine Nocke 16 bzw. eine Kurvenscheibe erfolgt. Die Nocke 16 bzw. Kurvenscheibe weist dabei an einer Außenkontur einen veränderlichen Abstand zu einer Nockenachse 18 auf, um welche diese durch den Elektromotor 2 rotiert wird. Der Antrieb der Nocke 16 durch den Elektromotor 2 kann dabei über ein Zahnradpaar 21, ein Ritzel 20, eine um einen Kurvendrehpunkt 26 drehbar gelagerte Kurve 25, ein Gestänge 24 oder dergleichen erfolgen. In Fig. 5 sind dabei exemplarisch das Zahnradpaar 21, das Ritzel 20, die um den Kurvendrehpunkt 26 gelagerte Kurve 25 sowie das Gestänge 24 als Möglichkeiten der Verbindung zwischen Elektromotor 2 und Kurvenscheibe bzw. Nocke 16 dargestellt. Die Nocke 16 kann auch als auf einer Welle angebrachte Steuerungsscheibe, deren Mittelpunkt außerhalb der Wellenachse liegt, oder als Hebel ausgebildet sein. Eine Betätigung der Nocke 16 kann über den Elektromotor 2 direkt oder über ein mit dem Elektromotor 2 verbundenes Getriebe, welches wiederum eine lineare oder eine nicht lineare Übersetzung aufweisen kann, angetrieben sein.

Über die derart einen unterschiedlichen Abstand zur Nockenachse 18 aufweisende Kontur der Nocke 16 bzw. Kurvenscheibe wird der Bremsbelag 4 in Richtung des Reibbelages 5 bewegt bzw. gedrückt, sodass sich durch den über einen Umfang der Nocke 16 bzw. Kurvenscheibe veränderlichen Abstand der Außenkontur der Nocke 16 bzw. Kurvenscheibe von der Nockenachse 18 eine beliebige über den Betätigungshub veränderbare Übersetzung einstellen lässt. Dadurch wird eine vom Elektromotor 2 aufgebrachte Kraft abhängig von einem Betätigungshub der Bremse 1 in eine Andrückkraft 19 unterschiedlicher Größe übersetzt. Parallel zum Elektromotor 2 können eine Betätigungsfeder 22 und/oder eine umschlagende Feder 23 vorgesehen sein, um ein Betätigen der Bremse 1 und/oder ein Lösen der Bremse 1 zu unterstützen.

Natürlich können alternativ auch beliebige weitere Getriebe 3 eingesetzt werden, welche aus dem Stand der Technik bekannt sind, um eine über den Betätigungshub nicht konstante Übersetzung zu realisieren.

Es versteht sich, dass eine erfindungsgemäße Bremse 1 nicht nur als Scheibenbremse ausgebildet sein kann, sondern auch als Trommelbremse. Ferner können Bremsbelag 4 und Reibbelag 5 auch lediglich aus translatorisch bewegten Bauteilen gebildet sein, beispielsweise für lineare Verschiebe- oder Auf- und Abbewegungen. Weiter kann die erfindungsgemäße Bremse 1 bei einem Kraftfahrzeug sowohl als Parkbremse als auch als Betriebsbremse eingesetzt werden.

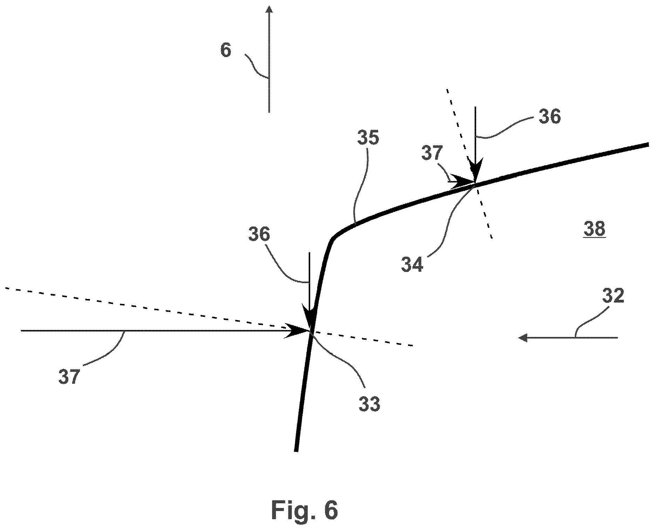

Fig. 6 zeigt ein Detail eines Getriebes 3 einer erfindungsgemäßen Bremse 1, welches zur konstruktiven Umsetzung der über den Betätigungshub veränderlichen Übersetzung Steuerelement 38 mit einer Kontur 35 aufweist, welches Steuerelement 38 entlang einer Antriebsrichtung 32 mittels des nicht dargestellten Elektromotors 2 bewegbar ist. Die Antriebsrichtung 32 kann natürlich auch als Kreisbahn, beispielsweise um eine Rotationsachse 15 des Elektromotors 2, ausgebildet sein. Für eine drehbar gelagerte Nocke 16, eine Steuerscheibe, über welche eine Betätigung erfolgt, oder dergleichen geltend folgende Überlegungen natürlich analog.

Dargestellt sind beispielhaft eine erste Kontaktposition 33 und eine zweite Kontaktposition 34 an der Kontur 35, an welchen Kontaktpositionen 33, 34 ein mit dem Bremsbelag 4 verbundenes Element gleiten kann, um den Bremsbelag 4 mittels des mit dem Steuerelement 38 verbundenen Elektromotors 2 in Schließrichtung 6 zu betätigen. Ein Übersetzungsverhältnis von einer Bewegung der Kontur 35 in Antriebsrichtung 32 auf eine Bewegung des Bremsbelages 4 in Abtriebsrichtung bzw. in Schließrichtung 6 ergibt sich dabei anhand einer lokalen Steigung der Kontur 35. Das Übersetzungsverhältnis ist folglich in der ersten Kontaktposition 33 höher als in der zweiten Kontaktposition 34. Um eine geforderte Schließkraft zu erreichen, ergibt sich jedoch in der ersten Kontaktposition 33 eine wesentlich höhere Stützkraft 37 senkrecht zur Schließrichtung 6, welche bereits bei geringer Reibung zu einer Selbsthemmung führen kann, als in der zweiten Kontaktposition 34. Parallel zu der Schließkraft, mit welcher der Bremsbelag gegen den Reibbelag gedrückt wird, wirkt die Schließreaktionskraft 36 auf die Kontur wie dargestellt. Um Selbsthemmung zu verhindern wird erfindungsgemäß bei Bestimmung der Übersetzung an der Kontur 35 eine auftretende Reibung derart berücksichtigt, dass auch bei der in einem ungünstigsten Fall auftretenden Reibung Selbsthemmung vermieden ist. Dadurch wird eine Steigung der Kontur 35 vermieden, welche rechnerisch zur Erreichung eines beispielsweise für die Überwindung des Luftspaltes 7 angemessenen, sehr hohen Übersetzungsverhältnisses erforderlich, jedoch aufgrund auftretender Reibung durch die Selbsthemmung praktisch nicht umsetzbar wäre.

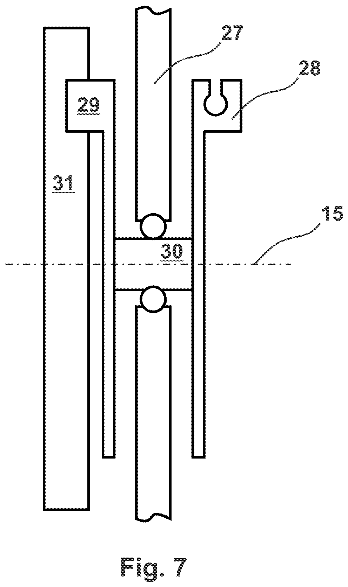

Fig. 7 zeigt schematisch eine erfindungsgemäß ausgebildete Bremse 1, welche sowohl über den Elektromotor 2 und das Getriebe 3 als auch über ein an einem Seilzuganschluss 28 befestigtes Seil betätigbar ist. Dabei wirkt das hier nicht dargestellte Getriebe 3, mit welchem der Elektromotor 2 verbunden ist, auf ein Betätigungsteil 31, mit welchem der Bremsbelag 4 verbunden ist. Mit dem Betätigungsteil 31 ist ferner ein Übertragungselement 30 verbunden, welches den Seilzuganschluss 28 aufweist, sodass das Betätigungsteil 31 sowohl über den Seilzuganschluss 28 als auch über den Elektromotor 2 betätigbar ist. Wie ersichtlich ist das Übertragungselement 30 um die Rotationsachse 15 des Betätigungsteiles 31 im Gehäuse 27 des Getriebes 3 drehbar gelagert. Das Betätigungsteil 31 ist mit dem Übertragungselementes 30 über einen Mitnehmer 29 drehbar gelagert. Der Mitnehmer 29 kann derart mit dem Betätigungsteil 31 verbunden sein, dass eine Bewegung des Mitnehmers 29 zwar auf das Betätigungsteil 31 übertragen wird, jedoch eine Bewegung des Betätigungsteil 31, welche durch den Elektromotor 2 bewirkt sein kann, keine Bewegung des Übertragungselementes 30 bzw. des Seilzuganschlusses 28 bewirkt. Dadurch kann eine entsprechende Bremse 1 auf einfache Weise sowohl als Betriebsbremse als auch als Parkbremse in einem Kraftfahrzeug eingesetzt werden. Durch die abgedichtete Lagerung des Übertragungselementes 30 im Getriebe 3 sowie den außerhalb des Getriebes 3 angeordneten Seilzuganschluss 28 kann das Seil außerhalb des Getriebes 3 verbleiben, sodass Dichtheitsprobleme, welche sich bei einer Durchführung eines bewegten Seiles durch das Gehäuse 27 des Getriebes 3 ergeben würden, vermieden sind.

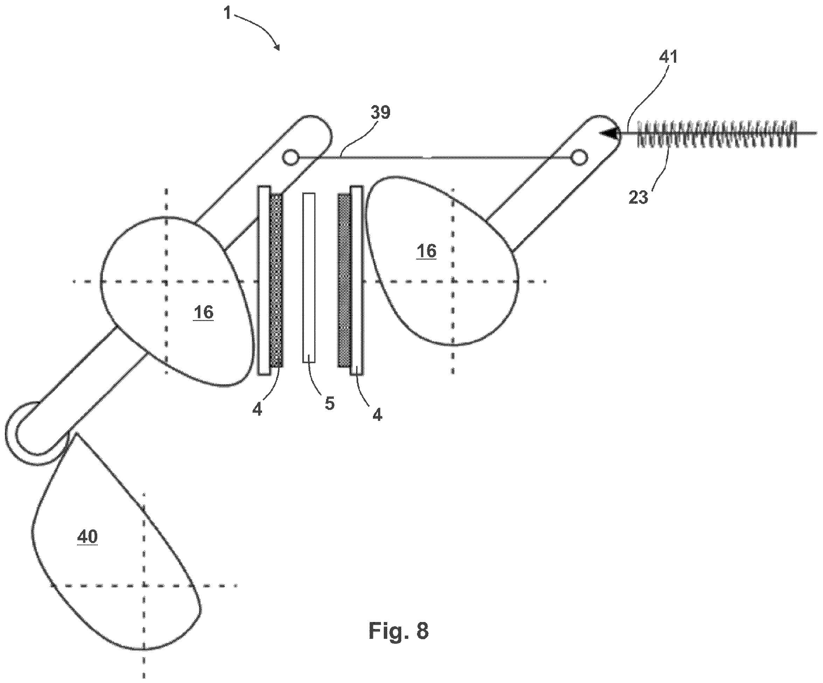

Fig. 8 zeigt eine als Schwimmsattelbremse ausgebildete erfindungsgemäße Bremse 1. Wie ersichtlich sind hierbei Bremsbeläge 4 beidseits eines üblicherweise durch eine Bremsscheibe gebildeten Reibbelages 5 angeordnet und durch gegengleich, synchron bewegbare und mechanisch verbundene Nocken 16 betätigbar. Das über den Betätigungshub veränderliche Übersetzungsverhältnis von einem nicht dargestellten, die Nocken 16 betätigenden Elektromotor 2 auf die Bewegung der Bremsbeläge 4 wird hierbei über die Nocken 16 realisiert. Es versteht sich, dass auch hier Kugelrampen 14 oder andere Getriebe 3 eingesetzt werden könnten. Ferner kann auch hier wie beispielhaft dargestellt eine Feder 23 vorgesehen sein, um bei einem Betätigen oder Öffnen der Bremse 1 zu unterstützen. Eine Betätigungskraft 41 kann vom nicht dargestellten Elektromotor 2 auf die Nocken 16 über einen Hebel wie dargestellt oder natürlich auch direkt aufgebracht werden. Alternativ kann der Elektromotor 2 auch über einen Betätigungsnocken 40, welcher zur Veranschaulichung ebenfalls dargestellt ist, auf die Nocken 16 wirken. Wie ersichtlich sind die Nocken 16 über ein Verbindungselement 39 verbunden, sodass Bewegungen der Nocken 16 synchron erfolgen.

Die in Fig. 8 dargestellte Bremse 1 kann beispielsweise für einen Aufzug eingesetzt werden, indem die Bremsbeläge 4 mit einer Aufzugskabine verbunden sind und der Reibbelag durch ein mit dem Aufzugsschacht verbundendes, vertikal im Aufzugsschacht angeordnetes Element gebildet wird. Die in Fig. 8 dargestellten Bestandteile der Bremse 1 sind somit in der Regel auf der Aufzugskabine angeordnet. Ebenso ist der in Fig. 8 nicht dargestellte Elektromotor 2, welcher auf die Nocken 16 wirkt, üblicherweise auf der Aufzugskabine angeordnet. Eine Zentrierung der Bremse 1 bei einer Betätigung erfolgt dann durch eine horizontale Bewegung der Aufzugskabine, sodass beide Bremsbeläge 4 gleichermaßen am starr mit dem Aufzugsschacht verbundenen Reibbelag 5 anliegen. Alternativ kann die in Fig. 7 dargestellte Bremse 1 auch als Festsattelbremse ausgebildet sein.

## Patentansprüche

1. Verfahren zum Bestimmen von Auslegungsparametern einer elektromechanischen Bremse (1), wobei die Bremse (1) einen Elektromotor (2) aufweist, welcher über ein Getriebe (3) mit einem Bremsbelag (4) verbunden ist, welcher Bremsbelag (4) an einen relativ zum Bremsbelag (4) bewegbaren Reibbelag (5) drückbar ist, wobei der Elektromotor (2) mit dem Bremsbelag (4) über ein Getriebe (3) verbunden ist, welches eine über einen Betätigungshub nicht konstante Übersetzung aufweist, **dadurch gekennzeichnet, dass** ein Elektromotor (2), ein Bremsbelag (4) sowie ein Reibbelag (5) gewählt werden, wonach die Übersetzung anhand des über den Betätigungshub wirkenden Gegenmomentes, welches aufgrund des gewählten Elektromotors (2), des gewählten Bremsbelages (4) sowie des gewählten Reibbelages (5) und einer mechanischen Verbindung dieser Elemente auf das Getriebe (3) wirkt, derart gewählt wird, dass der Elektromotor (2) im Wesentlichen über den gesamten Betätigungshub kontinuierlich in einem optimalen Betriebspunkt, insbesondere in einem Betriebspunkt maximaler Leistung, betrieben wird.

2. Verfahren nach Anspruch 1, **dadurch gekennzeichnet, dass** ein Gegenmoment, welches bei einer Betätigung während eines Betätigungshubes auf den Elektromotor (2) wirkt, rechnerisch insbesondere anhand von Toleranzen, einem Luftspalt (7) zwischen dem Bremsbelag (4) und dem Reibbelag (5) in einem geöffneten Zustand der Bremse (1), Reibungsverlusten im Getriebe (3) und/oder möglichen Wärmedehnungen ermittelt und bei der Bestimmung der variablen Übersetzung berücksichtigt wird.

3. Verfahren nach Anspruch 1 oder 2, **dadurch gekennzeichnet, dass** das Gegenmoment mit numerischer Simulation bestimmt wird.

4. Verfahren nach Anspruch 1 oder 3, **dadurch gekennzeichnet, dass** bei der Bestimmung der vom Betätigungshub abhängigen, nicht konstanten Übersetzung eine Reduktion des Motormomentes berücksichtigt wird, welche hervorgerufen wird durch Entmagnetisierung an einem Ende einer geplanten Lebensdauer, erhöhte Temperatur, Fertigungstoleranzen und/oder Reduktion der Versorgungsspannung bis zu einer Untergrenze, an welcher eine Funktion der Bremse (1) noch gewährleistet werden muss.

5. Verfahren zum Herstellen einer elektromechanischen Bremse (1), **dadurch gekennzeichnet, dass** die elektromechanische Bremse (1) gemäß Auslegungsparametern hergestellt wird, welche in einem Verfahren nach einem der Ansprüche 1 bis 4 bestimmt wurden.

6. Elektromechanische Bremse (1), aufweisend einen Elektromotor (2) sowie einen Bremsbelag (4) und einen relativ zum Bremsbelag (4) bewegbar angeordneten Reibbelag (5), wobei der Bremsbelag (4) mittels des Elektromotors (2) an den Reibbelag (5) drückbar ist, um durch Reibung zwischen Bremsbelag (4) und Reibbelag (5) mechanische Energie in Wärmeenergie zu wandeln, **dadurch gekennzeichnet, dass** der Elektromotor (2) mit dem Bremsbelag (4) über ein Getriebe (3) mit einer über einen Betätigungshub nicht konstanten Übersetzung verbunden ist, wobei die elektromechanische Bremse (1) gemäß Auslegungsparametern hergestellt wird, welche in einem Verfahren zum Bestimmen von Auslegungsparametern bestimmt wurden, wobei die Bremse (1) einen Elektromotor (2) aufweist, welcher über ein Getriebe (3) mit einem Bremsbelag (4) verbunden ist, welcher Bremsbelag (4) an einen relativ zum Bremsbelag (4) bewegbaren Reibbelag (5) drückbar ist, wobei der Elektromotor (2) mit dem Bremsbelag (4) über ein Getriebe (3) verbunden ist, welches eine über einen Betätigungshub nicht konstante Übersetzung aufweist, wobei ein Elektromotor (2), ein Bremsbelag (4) sowie ein Reibbelag (5) gewählt werden, wonach die Übersetzung anhand des über den Betätigungshub wirkenden Gegenmomentes, welches aufgrund des gewählten Elektromotors (2), des gewählten Bremsbelages (4) sowie des gewählten Reibbelages (5) und einer mechanischen Verbindung dieser Elemente auf das Getriebe (3) wirkt, derart gewählt wird, dass der Elektromotor (2) im Wesentlichen über den gesamten Betätigungshub kontinuierlich in einem optimalen Betriebspunkt, insbesondere in einem Betriebspunkt maximaler Leistung, betrieben wird.

7. Elektromechanische Bremse (1) nach Anspruch 6, **dadurch gekennzeichnet, dass** die Übersetzung des Getriebes (3) derart abhängig vom Betätigungshub gewählt ist, dass der Elektromotor (2) bei einer Betätigung über den Betätigungshub in einem optimalen Betriebspunkt, insbesondere einem Betriebspunkt maximaler Leistung, betreibbar ist.

8. Elektromechanische Bremse (1) nach Anspruch 6 oder 7, **dadurch gekennzeichnet, dass** das Getriebe (3) zwei um eine Rotationsachse (15) drehbare Scheiben (13) aufweist, welche über zumindest eine in einer Kugelrampe (14) angeordnete Kugel verbunden sind, wobei die über den Betätigungshub nicht konstante Übersetzung des Getriebes (3) zumindest teilweise mit der Kugelrampe (14) gebildet ist.

9. Elektromechanische Bremse (1) nach einem der Ansprüche 6 bis 8, **dadurch gekennzeichnet, dass** das Getriebe (3) zumindest einen um eine Rotationsachse (15) drehbar angeordneten, unrunden Nocken (16) aufweist, über welchen der Elektromotor (2) mit dem Bremsbelag (4) verbunden ist, wobei die über den Betätigungshub nicht konstante Übersetzung des Getriebes (3) zumindest teilweise mit dem unrunden Nocken (16) gebildet ist.

10. Elektromechanische Bremse (1) nach einem der Ansprüche 6 bis 9, **dadurch gekennzeichnet, dass** das Getriebe (3) eine auf einer Welle angebrachte Steuerungsscheibe, deren Mittelpunkt außerhalb der Wellenachse liegt, oder einen Hebel aufweist, um die über den Betätigungshub nicht konstante Übersetzung konstruktiv umzusetzen.

11. Elektromechanische Bremse (1) nach einem der Ansprüche 6 bis 10, **dadurch gekennzeichnet, dass** das Getriebe (3) ein Kurvengetriebe, eine Kurvenscheibe, ein Gestänge (24) und/oder ein Koppelgetriebe aufweist, um die über den Betätigungshub nicht konstante Übersetzung konstruktiv umzusetzen.

12. Elektromechanische Bremse (1) nach einem der Ansprüche 6 bis 11, **dadurch gekennzeichnet, dass** das Getriebe (3) derart ausgebildet ist, dass das Übersetzungsverhältnis über den Betätigungshub sowohl positive als auch negative Werte aufweist.

13. Elektromechanische Bremse (1) nach einem der Ansprüche 6 bis 12,
**dadurch gekennzeichnet, dass** das Getriebe (3) derart ausgebildet ist, dass das Übersetzungsverhältnis zumindest über einen Teilbereich des Betätigungshubes Null ist, sodass in diesem Teilbereich eine Bewegung des Elektromotors (2) keine Bewegung des Bremsbelages (4) relativ zum Reibbelag (5) bewirkt.

14. Elektromechanische Bremse (1) nach einem der Ansprüche 6 bis 13, **dadurch gekennzeichnet, dass** ein Seilzuganschluss (28) vorgesehen ist, sodass der Bremsbelag (4) durch einen Zug an einem am Seilzuganschluss (28) angebrachten Seil gegen den Reibbelag (5) drückbar ist.

15. Fahrzeug mit einer elektromechanischen Bremse (1), **dadurch gekennzeichnet, dass** die elektromechanische Bremse (1) nach einem der Ansprüche 6 bis 14 ausgebildet ist.

## Claims

1. Method for determining design parameters of an electromechanical brake (1), wherein the brake (1) comprises an electric motor (2) which is connected via a transmission (3) to a brake lining (4), which brake lining (4) can be pressed against a friction lining (5) which can be moved relative to the brake lining (4), wherein the electric motor (2) is connected to the brake lining (4) via a transmission (3) which has a transmission ratio which is not constant over an actuation stroke, **characterized in that** an electric motor (2), a brake lining (4) and a friction lining (5) are selected, whereupon the transmission ratio is selected on the basis of the counter-torque acting over the actuation stroke, which counter-torque acts on the transmission (3) on the basis of the selected electric motor (2), the selected brake lining (4), the selected friction lining (5) and a mechanical connection of these elements, in such a way that the electric motor (2) is operated continuously at an optimum operating point, in particular at an operating point of maximum power, substantially over the entire actuation stroke.

2. Method according to claim 1, **characterized in that** a counter-torque, which acts on the electric motor (2) when actuated during an actuation stroke, is determined by calculation, in particular on the basis of tolerances, an air gap (7) between the brake lining (4) and the friction lining (5) in an open state of the brake (1), friction losses in the transmission (3) and/or possible thermal expansions, and is taken into account when determining the variable transmission ratio.

3. Method according to claim 1 or 2, **characterized in that** the counter-torque is determined with numerical simulation.

4. Method according to claim 1 or 3, **characterized in that** in the determination of the non-constant transmission ratio dependent on the actuation stroke, a reduction of the motor torque is taken into account which is caused by demagnetization at one end of a planned service life, increased temperature, manufacturing tolerances and/or reduction of the supply voltage to a lower limit at which a function of the brake (1) must still be guaranteed.

5. Method for manufacturing an electromechanical brake (1), **characterized in that** the electromechanical brake (1) is manufactured according to design parameters determined in a method according to one of claims 1 to 4.

6. Electromechanical brake (1), comprising an electric motor (2) as well as a brake lining (4) and a friction lining (5) arranged movably relative to the brake lining (4), wherein the brake lining (4) can be pressed against the friction lining (5) by means of the electric motor (2) in order to convert mechanical energy into thermal energy by friction between the brake lining (4) and the friction lining (5), **characterized in that** the electric motor (2) is connected to the brake lining (4) via a transmission (3) with a transmission ratio which is not constant over an actuation stroke, wherein the electromechanical brake (1) is manufactured according to design parameters which have been determined in a method for determining design parameters, wherein the brake (1) comprises an electric motor (2) which is connected to a brake lining (4) via a transmission (3), which brake lining (4) can be pressed against a friction lining (5) which can be moved relative to the brake lining (4), wherein the electric motor (2) is connected to the brake lining (4) via a transmission (3) which has a transmission ratio which is not constant over an actuation stroke, wherein an electric motor (2), a brake lining (4) and a friction lining (5) are selected, whereupon the transmission ratio is determined on the basis of the counter-torque acting over the actuation stroke, which acts on the transmission (3) due to the selected electric motor (2), the selected brake lining (4) as well as the selected friction lining (5) and a mechanical connection of these elements, in such a way that the electric motor (2) is operated continuously at an optimum operating point, in particular at an operating point of maximum power, substantially over the entire actuation stroke.

7. Electromechanical brake (1) according to claim 6, **characterized in that** the transmission ratio of the transmission (3) is selected as a function of the actuation stroke in such a way that the electric motor (2) can be operated at an optimum operating point, in particular at an operating point of maximum power, when actuated over the actuation stroke.

8. Electromechanical brake (1) according to claim 6 or 7, **characterized in that** the transmission (3) has two discs (13) which can rotate about an axis of rotation (15) and are connected via at least one ball arranged in a ball ramp (14), wherein the transmission ratio of the transmission (3), which is not constant over the actuation stroke, is formed at least partially with the ball ramp (14).

9. Electromechanical brake (1) according to one of claims 6 to 8, **characterized in that** the transmission (3) has at least one non-circular cam (16) which is arranged rotatably about an axis of rotation (15) and via which the electric motor (2) is connected to the brake lining (4), wherein the transmission ratio of the transmission (3), which is not constant over the actuation stroke, is formed at least partially with the non-circular cam (16).

10. Electromechanical brake (1) according to one of claims 6 to 9, **characterized in that** the transmission (3) has a control disc mounted on a shaft, the center of which lies outside the shaft axis, or a lever in order to constructively implement the transmission ratio which is not constant over the actuation stroke.

11. Electromechanical brake (1) according to one of claims 6 to 10, **characterized in that** the transmission (3) has a cam gear, a cam plate, a linkage (24) and/or a coupling gear in order to constructively implement the transmission ratio which is not constant over the actuation stroke.

12. Electromechanical brake (1) according to one of claims 6 to 11, **characterized in that** the transmission (3) is designed in such a way that the transmission ratio has both positive and negative values over the actuation stroke.

13. Electromechanical brake (1) according to one of claims 6 to 12, **characterized in that** the transmission (3) is designed in such a way that the transmission ratio is zero at least over a partial range of the actuation stroke, so that in this partial range a movement of the electric motor (2) does not cause any movement of the brake lining (4) relative to the friction lining (5).

14. Electromechanical brake (1) according to one of claims 6 to 13, **characterized in that** a cable pull connection (28) is provided so that the brake lining (4) can be pressed against the friction lining (5) by a pull on a cable attached to the cable pull connection (28).

15. Vehicle having an electromechanical brake (1), **characterized in that** the electromechanical brake (1) is designed according to one of claims 6 to 14.

## Revendications

1. Procédé pour déterminer les paramètres de dimensionnement d'un frein électromagnétique (1), dans lequel le frein (1) comporte un moteur électrique (2) qui est relié par un engrenage (3) à une plaquette de frein (4), laquelle plaquette de frein (4) peut être pressée sur une plaquette de friction (5) mobile par rapport à la plaquette de frein (4), le moteur électrique (2) étant relié à la plaquette de frein (4) par un engrenage (3) qui présente une multiplication non constante sur une course d'actionnement, **caractérisé en ce que** l'on choisit un moteur électrique (2), une plaquette de frein (4) et une plaquette de friction (5) en fonction desquels la multiplication est choisie à l'aide du couple résistant agissant sur la course d'actionnement, qui agit sur l'engrenage (3) sous l'action du moteur électrique (2) choisi, de la plaquette de frein (4) choisie et de la plaquette de friction (5) choisie et d'un assemblage mécanique de ces éléments, de telle manière que le moteur électrique (2) est actionné de façon sensiblement continue à un point de fonctionnement optimal sur toute la course d'actionnement, en particulier à un point de fonctionnement de puissance maximale.

2. Procédé selon la revendication 1, **caractérisé en ce qu'**un couple résistant agissant sur le moteur électrique (2) lors d'un actionnement pendant une course d'actionnement est déterminé par le calcul, en particulier à l'aide de tolérances, d'un espace libre (7) entre la plaquette de frein (4) et la plaquette de friction (5) dans un état ouvert des freins (1), de pertes par frottement dans l'engrenage (3) et/ou de possibles dilatations thermiques, et pris en compte pour déterminer la multiplication variable.

3. Procédé selon la revendication 1 ou 2, **caractérisé en ce que** le couple résistant est déterminé avec une simulation numérique.

4. Procédé selon la revendication 1 ou 3, **caractérisé en ce que** la détermination de la multiplication non constante dépendante de la course d'actionnement tient compte d'une réduction du couple moteur qui est provoquée par la démagnétisation à la fin d'une durée de vie prévue, par l'élévation de la température, par les tolérances de fabrication et/ou par la baisse de la tension d'alimentation jusqu'à une limite inférieure à laquelle le fonctionnement du frein (1) doit encore être garanti.

5. Procédé de fabrication d'un frein électromécanique (1), **caractérisé en ce que** le frein électromécanique (1) est fabriqué selon des paramètres de dimensionnement qui ont été déterminés par un procédé selon l'une des revendications 1 à 4.

6. Frein électromécanique (1) présentant un moteur électrique (2), ainsi qu'une plaquette de frein (4) et une plaquette de friction (5) disposée de façon mobile par rapport à la plaquette de frein (4), dans lequel la plaquette de frein (4) peut être pressée au moyen du moteur électrique (2) sur la plaquette de friction (5) pour transformer de l'énergie mécanique en énergie thermique par le frottement entre la plaquette de frein (4) et la plaquette de friction (5), **caractérisé en ce que** le moteur électrique (2) est relié à la plaquette de frein (4) par un engrenage (3) ayant une multiplication non constante sur la course d'actionnement, le frein électromécanique (1) étant fabriqué selon des paramètres de dimensionnement qui ont été déterminés par un procédé pour déterminer des paramètres de dimensionnement, le frein (1) présentant un moteur électrique (2) qui est relié par un engrenage (3) à une plaquette de frein (4), laquelle plaquette de frein (4) peut être pressée sur une plaquette de friction (5) mobile par rapport à la plaquette de frein (4), le moteur électrique (2) étant relié à la plaquette de frein (4) par un engrenage (3) qui présente une multiplication non constante sur une course d'actionnement, un moteur électrique (2), une plaquette de frein (4) et une plaquette de friction (5) étant choisis en fonction desquels la multiplication est choisie à l'aide du couple résistant agissant sur la course d'actionnement, qui agit sur l'engrenage (3) sous l'action du moteur électrique (2) choisi, de la plaquette de frein (4) choisie et de la plaquette de friction (5) choisie et d'un assemblage mécanique de ces éléments, de telle manière que le moteur électrique (2) est actionné de façon sensiblement continue à un point de fonctionnement optimal sur toute la course d'actionnement, en particulier à un point de fonctionnement de puissance maximale.

7. Frein électromécanique (1) selon la revendication 6, **caractérisé en ce que** la multiplication de l'engrenage (3) est choisie en fonction de la course d'actionnement de telle manière que le moteur électrique (2) peut fonctionner à un point de fonctionnement optimal lors d'un actionnement sur toute la course d'actionnement, en particulier à un point de fonctionnement de puissance maximale.

8. Frein électromécanique (1) selon la revendication 6 ou 7, **caractérisé en ce que** l'engrenage (3) présente deux disques (13) pouvant tourner autour d'un axe de rotation (15), qui sont reliés par au moins une bille disposée sur une rampe à bille (14), la multiplication non constante de l'engrenage (3) sur la course d'actionnement étant au moins en partie constituée avec la rampe à bille (14).

9. Frein électromécanique (1) selon l'une des revendications 6 à 8, **caractérisé en ce que** l'engrenage (3) présente au moins une came non ronde (16) disposée avec possibilité de rotation autour d'un axe de rotation (15), par laquelle le moteur électrique (2) est relié à la plaquette de frein (4), la multiplication non constante de l'engrenage (3) sur la course d'actionnement étant au moins en partie constituée avec la came non ronde (16).

10. Frein électromécanique (1) selon l'une des revendications 6 à 9, **caractérisé en ce que** l'engrenage (3) présente un disque de commande monté sur un arbre, dont le centre se trouve à l'extérieur de l'axe de l'arbre, ou un levier, afin de convertir de façon constructive la multiplication non constante sur la course d'actionnement.

11. Frein électromécanique (1) selon l'une des revendications 6 à 10, **caractérisé en ce que** l'engrenage (3) est un engrenage à came, un disque à came, une tringlerie (24) et/ou un engrenage de couplage destiné à convertir de façon constructive la multiplication non constante sur la course d'actionnement.

12. Frein électromécanique (1) selon l'une des revendications 6 à 11, **caractérisé en ce que** l'engrenage (3) est construit de telle manière que le rapport de multiplication présente des valeurs positives aussi bien que des valeurs négatives sur la course d'actionnement.

13. Frein électromécanique (1) selon l'une des revendications 6 à 12, **caractérisé en ce que** l'engrenage (3) est conformé de telle manière que le rapport de multiplication est nul au moins sur une partie de la course d'actionnement, de sorte que, dans cette partie, un mouvement du moteur électrique (2) ne produit pas un mouvement de la plaquette de frein (4) par rapport à la plaquette de friction (5).

14. Frein électromécanique (1) selon l'une des revendications 6 à 13, **caractérisé en ce qu'**un raccord de câble de traction (28) est prévu, de sorte que la plaquette de frein (4) peut être pressée contre la plaquette de friction (5) par une traction sur un câble monté sur le raccord de câble de traction (28).

15. Véhicule muni d'un frein électromécanique (1), **caractérisé en ce que** le frein électromécanique (1) est conçu selon l'une des revendications 6 à 14.
